# EUROPEAN PATENT SPECIFICATION

(11) **EP 3 558 786 B1**
(45) Date of publication and mention of the grant of the patent: **14.02.2024**
(21) Application number: 18710580.4
(22) Date of filing: 02.02.2018
(51) Int. Cl.: B61K 7/04, F16D 65/00, F16D 65/04

(54) **LAMELLA OF RAIL ELEMENT, PREFERABLY RAIL BRAKE AND METHOD OF ITS USE**
LAMELLE EINES SCHIENENELEMENTS, VORZUGSWEISE SCHIENENBREMSE UND VERFAHREN ZUR VERWENDUNG DAVON
LAMELLE D'ÉLÉMENT DE RAIL, DE PRÉFÉRENCE FREIN DE RAIL ET SON PROCÉDÉ D'UTILISATION

(30) Priority: 07.02.2017 SI 201700039
(43) Date of publication of application: 30.10.2019
(73) Proprietor: Pavcnik, Bojan, 3320 Velenje (SI)
(72) Inventor: Pavcnik, Bojan, 3320 Velenje (SI)
(74) Representative: Marn, Jure
(86) International application number: PCT/SI2018/050003
(87) International publication number: WO 2018/147812

(56) References cited:
- EP-A1- 0 313 771
- AU-A- 4 457 399
- CN-A- 101 590 857
- CN-U- 201 991 980

## Description

### Field of technology

brake devices, rail devices, guiding (guard) rails.

### Technical problem

The technical problem to be solved with a present invention is occurrence of high frequency noise (such as screeching - whistling) during braking of rolling stock using rail brakes (retarders) during railroad cars manipulation at railways shunting stations, at marshalling hump yards and at similar railroad installations requiring brake devices.

### State of the Art

Patent EP 2807068 describes an active anti-noise device for rail brakes which is independent from rail brakes, wherein the line distributor is positioned directly next to rails to provide noise reduccing heavily-fluid composite compound onto wagon wheels flanks in accurate dosage in real time and in required-desired quantity. The disadvantage of this system is subsequent maintenance of such system.

EP 2750954 describes modified braking segments belonging to the rail brakes, which have inserted sintered ceramic disks (packs) into said braking segments. In this case, cylindrical holes are made into the standard braking segment, into which so-called sinter ceramic inserts (sinter ceramic packs) are inserted. They operate in a way that increases the abrasiveness by use of ceramics in order to reduce noise during braking of railroad cars while minimizing reduction in brake performance during the braking process. The disadvantage of this system is that due to the increased abrasiveness (ceramics), the wear of the contact parts of the wheels and the braking segments is significantly increased. This significantly increases maintenance costs (life cycle costs - LCC of rail brakes and wagon wheels), which means less economic attractiveness of this solution.

The disadvantage of this system is also the cylindrical (round) shape of the lamellas, where their concentration is longitudinally in the middle of the braking segment, i.e. longitudinally along the symmetry with successive cylindrical holes, whereby, due to such an arrangement, the sound-absorbent material - sinter ceramics contained in the holes is less effective in reducing of braking noise. Such an arrangement also weakens physical properties of the entire brake segment, which can result in breakage of the segment at very high burdenings. Therefore, the use of these segments is limited to brakes with smaller jaw forces and / or at the hump yards with lower speeds of waggons.

CN201991980 presents a brake plate for a train reducer. The brake plate demarcates a friction brake surface which is pushed against the surface of a train wheel. The brake plate comprises at least an elastic friction material block, at least a rigid friction material block and a supporting structure, wherein the elastic friction material block and the rigid friction material block are superimposed together in one superimposing direction to form a laminated structure, the laminated structure demarcates one part of the friction brake surface or a laminated side surface of the entire friction brake surface which is vertical to the superimposing direction, the elastic friction block and the rigid friction block are exposed in the laminated side surface, and the supporting structure comprises a tightening element which is used for tightening the laminated structure onto the supporting structure. The utility model also provides a train reducer having the brake plate. *Further, laminated structure vibrating as a whole when placed in contact with the wheel, having high natural frequency is described.*

### Description of new solution

Lamella of rail element, preferably of rail brake and method of its use solves above identified technical problems in such a way that at least one lamella is settled to rail element, preferably above or below of said rail element by means of attaching or inserting into at least one groove made into the braking part of said rail brake, where said lamella is made from composite material with anti-noise, and not necessarily braking, effects.

For the purposes of this application said lamella is any type of insert or attachment, regardless of shape, which could be inserted into at least one said groove in said rail element, preferably in rail brake, and/or could be attached on the top and/or below said rail element, preferably rail brake or use it as an integral part of rail brake (such as in the upper or lower part of braking-contact part), preferably said lamellais are in form of a plate, made of suitable material, preferably composite, having anti-noise, and not necessarily braking, effects.

A method of noise reduction caused by rail element, preferably by rail brake, according to this invention provides for limiting of noise during braking whereby at least one lamella is operating on at least one wheel of a rolling stock, wherein method of limiting of noise during braking comprises the following steps:
- entrance of said wheel onto said rail element, preferably rail brake;
- contact in between lamella of rail element attached to rail element, preferably rail brake, and said at least one wheel of said rolling stock;
- friction between said rail element, preferably rail brake and said at least one wheel of said rolling stock, due to braking (reduction of speed) of said rolling stock, and resulting in high frequency noise;
- limitation of noise propagation using said lamella of said rail element, preferably rail brake in such a way that said lamella of said rail element, preferably rail brake acts
   as anti-noise barrier or its part or damper having elastic structure and resulting in absorbing vibrations caused by contact between said at least one wheel of said rolling stock and said rail element, preferably rail brake;
- release of noise reduction substance, said noise reduction substance comprised in said lamella of said rail element, preferably rail brake.

The method of noise reduction caused by rail element, preferably rail brake can further comprise step of releasing of noise reduction substance during braking of said rolling stock by means of said rail element, preferably rail brake, said noise reduction substance being comprised in said lamella of said rail element, preferably rail brake.

The method of noise reduction caused by rail element, preferably rail brake can further comprise step of releasing of a substance during braking of said rolling stock by means of said rail element, preferably rail brake, said substance comprised in said lamella of said rail element, preferably rail brake and having properties to act as lubricant preventing substantially exceeding border value of friction coefficient between said rail element, preferably brake and said at least one wheel of said rolling stock, said border value of friction coefficient between said rail element, preferably brake and said at least one wheel of said rolling stock ranging between 0.1 and 0.4 preferably around 0.3.

The method of noise reduction caused by rail element, preferably rail brake can further comprise step of having said lamella of said rail element, preferably rail brake equipped with reinforcing structure in such a way that said reinforcing structure provides for structure and form, and enables at least one from the following: use of at least one substance of said lamella of said rail element, preferably rail brake which otherwise poorly binds with at least one other substance of said lamella of said rail element, preferably rail brake, use of at least one substance of said lamella of said rail element, preferably rail brake which would under increased temperature during braking soften, use of at least one substance of said lamella of said rail element, preferably rail brake which would under increased temperature during braking change its form unless reinforced.

Above referenced technical problems is solved by an assembly comprising a plurality of elastic lamellas, and a rail element, being a rail brake, wherein said rail brake comprises a friction surface, and a reinforcing supporting structure, wherein said lamellas or a parts of them of said rail element acts as anti-noise barrier or its part or as damper having elastic structure and resulting in absorbing vibrations caused by contact between said at least one wheel of rolling stock and said friction surface, wherein grooves having non-cylindrical cross section in which said lamellas are installed are formed in said friction surface of said rail element, characterized in further lamellas are positioned either above, or below, or both above and below of said rail element.

At least one lamella of said rail element, preferably rail brake can be further comprised in said rail element, preferably rail brake (4) wherein at least one lamella of rail element, preferably rail brake (1, 2, 3) can be continuous (1, 3), discontinuous having at least two sequentially arranged lamellas (2), settled above (1), below (3) or in the middle (2) of braking part of said rail element, preferably rail brake (4).

At least one lamella of said rail element, preferably rail brake can further comprise noise reduction substance released by said lamella of said rail element, preferably rail brake to reduce noise generated during braking of said at least one wheel of at least one rolling stock by said rail element, preferably rail brake.

At least one lamella of said rail element, preferably rail brake can further comprise substance released by said lamella of said rail element, preferably rail brake, said substance having properties to act as lubricant preventing substantially exceeding border value of friction coefficient between said rail element, preferably brake and said at least one wheel of said rolling stock, said border value of friction coefficient between said rail element, preferably brake and said at least one wheel of said rolling stock ranging between 0.1 and 0.4 preferably around 0.3.

At least one lamella of said rail element, preferably rail brake can further comprise reinforcing structure, said reinforcing structure providing for structure and form, and enabling at least one from the following: use of at least one substance of said lamella of said rail element, preferably rail brake which otherwise poorly binds with at least one other substance of said lamella of said rail element, preferably rail brake, use of at least one substance of said lamella of said rail element, preferably rail brake which would under increased temperature during braking soften, use of at least one substance of said lamella of said rail element, preferably rail brake which would under increased temperature during braking change its form unless reinforced.

Said lamellas can be installed into said rail element, preferably rail brake installed longitudinally, transversally, slanted relative to longitudinal axis of said rail element, preferably rail brake under any angle, however, the best results were achieved if angle ranged between 20° and 70°.

Said lamella of said rail element, preferably rail brake or plurality thereof can be further installed into rail element, preferably rail brake either detachable or fixed, in view of example by screws, glue, adhesive, or any other way known in state of the art.

During moving of said at least one wheel of said rolling stock a friction surface (i.e. a surface of said rail element, preferably braking surface of rail brake without said lamella or plurality thereof) contacts said at least one wheel of said rolling stock resulting in contact between said friction surface of rail element, preferably braking surface of rail brake and said at least one wheel of said rolling stock, reducing speed of said at least one wheel of said rolling stock. This friction causes vibrations, resulting in unwanted noise. This unwanted noise should be limited or reduced, and this is made possible by having friction surface causing noise such as, for example, surface of said wheel of said rolling stock touched by at least one lamella of said rail element, preferably rail brake acting as anti-noise barrier or its part or damper having elastic structure and resulting in absorbing vibrations caused by friction contact between said at least one wheel of said rolling stock and said rail element, preferably rail brake.

Said lamella of said rail element, preferably rail brake is preferably made of composite material. In addition, said lamella of said rail element, preferably rail brake can be further made of a substance which can be released during grinding of said lamella of said rail element, preferably rail brake and acts as additional noise reduction substance while said lamella of said rail element, preferably rail brake acts as anti-noise barrier or its part or damper having elastic structure and resulting in absorbing vibrations caused by contact between said at least one wheel of said rolling stock and said rail element, preferably rail brake.

In case that effect of friction between said friction surface of rail element, preferably braking surface of rail brake and said at least one wheel of said rolling stock increases probability of damage to either surfaces in contact due to increased temperature (in practice this would be when friction coefficient ranges between 0.1 and 0.4, preferably around 0.3) said lamella of said rail element, preferably rail brake released substance can further act as lubricant limiting friction coefficient between said friction surface of rail element, preferably braking surface of rail brake and said at least one wheel of said rolling stock to friction coefficient ranging between 0.1 and 0.4, preferably around 0.3.

In a particular embodiment said lamella of said rail element, preferably rail brake is reinforced by reinforcement, by reinforcing said lamella of said rail element, preferably rail brake in such a way to give it structure and form, and to enable at least one from the following: use of at least one substance of said lamella of said rail element, preferably rail brake which otherwise poorly binds with at least one other substance of said lamella of said rail element, preferably rail brake, use of at least one substance of said lamella of said rail element, preferably rail brake which would under increased temperature during braking soften, use of at least one substance of said lamella of said rail element, preferably rail brake which would under increased temperature during braking change its form unless reinforced.

Solution according to this invention provides for economically more reasonable solution compared to state of the art as at least one lamella of said rail element, preferably rail brake is used instead of sinter ceramics, said at least one lamella of said rail element, preferably rail brake comprising well balanced combination of composite materials prepared in particular fashion with appropriate reinforcements to provide for reduction of braking noise on its source and at the same time providing appropriate strength, elasticity and thermic and pressure resistance at extreme friction loads. These lamellas reduce abrasivity and significantly increase life of braking segments, and therefore reduction of maintenance costs (LCC).

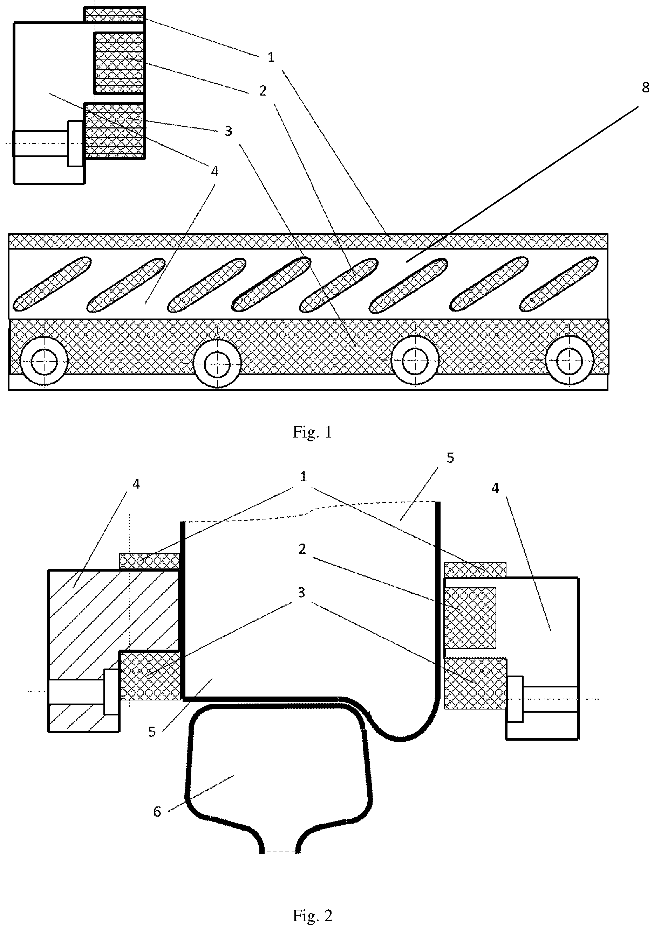

The solution according to this invention increases anti-noise effectiveness and provides for improvement of design against state of the art with the following:
A) upper and lower surface of friction surface of rail brake is provided with (continuous or discontinuous) installed lamellas of predetermined thickness, made of above referenced composite materials with reinforcement which is in particular seen in Fig. 1, this solution satisfying at least one of the following functions:
   1. said lamella of said rail element, preferably rail brake acts as mini anti-noise barrier as it limits unconstrained noise in proximity to noise source, and acts as damper in absorbing noise vibrations as a result of elastic material structure.
   2. during passing of a wheel through active rail brake or other rail element said composite material releases substance for braking noise reduction whereby due to other substances the friction coefficient stabilizes optimally in desired ranges thus limiting or preventing damage to rail brake.
B) If friction surface is too large the further lamellas can be added to lamellas as described under A), said further lamellas installed into special non-cylindrical grooves formed in the braking segments of rail brake, which is also seen in Fig. 1, wherein this possibility can be used also without upper or lower lamellas.

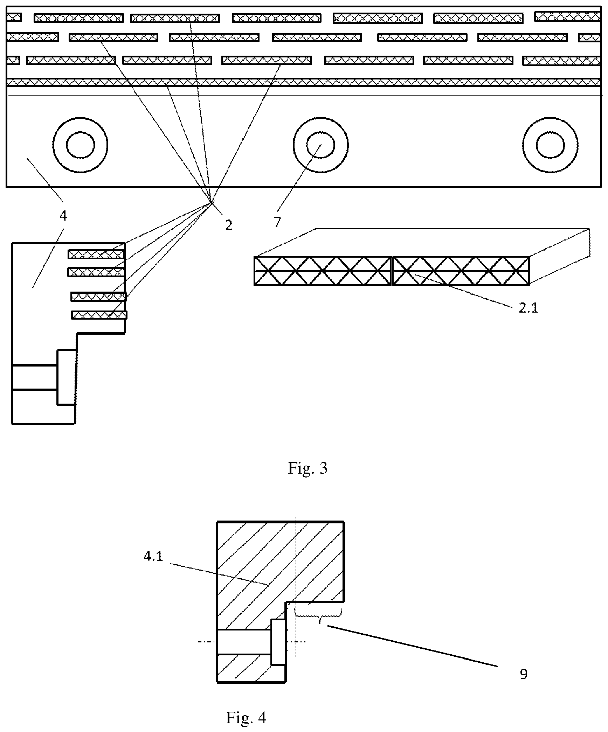

The middle installation of lamellas is performed in such a way that preferably non-cylindrical grooves are formed in either horizontal or vertical direction, or under any angle in any number, also in several levels or layers as seen in Fig. 3.

The form of groove in contact area can be elliptic as in Fig. 1, rectangular as in Fig. 3, or trapezium, or circular, or zig-zag, or sinus, or any other form, except cylindrical. Dashed vertical line in Fig. 1 shows line of wear part of rail brake, and lamellas can be installed up to this line.

Below, the invention is further explained with help of figures, these figures representing:
Fig. 1 shows a rail element, preferably braking part of rail brake, namely upper (continuous) lamella of rail element, preferably rail brake (1), middle lamella of rail element, preferably rail brake (2), lower (continuous) lamella of rail element, preferably rail brake (3), braking part of rail brake (4), friction surface (8).
Fig. 2 shows a wheel of a rolling stock during braking in rail brake, namely upper (continuous) lamella of rail element, preferably rail brake (1), middle lamella of rail element, preferably rail brake (2), lower (continuous) lamella of rail element, preferably rail brake (3), of rail element, preferably braking part of rail brake (4), wheel of rolling stock (5), rail (6).
Fig. 3 shows ail element, preferably braking part of rail brake, namely rail element, preferably braking part of rail brake (4), lamellas of rail element, preferably rail brake, forming discontinuous line (2), composite material with reinforcement (2.1).
Fig. 4 shows rail element, preferably braking part of rail brake (4) prior to installation, for example insertion or attachment of lamellas, also part of braking part of rail brake is shown, this part may be worn during braking (9), in parenthesis.

Said rail brake works in such a way that a wheel of a rolling stock (5) during braking enters rail brake which preferably comprises two braking parts of rail brake (4). Said rail brake by means of friction surface (8) of braking part of rail brake (4) engages by friction said wheel of said rolling stock (5) and thus reduces its momentum (performs the braking). This causes noise which is limited or essentially prevented by lamellas according to this invention. The braking part of rail brake (4) according to this invention comprises at least one lamella of rail element, preferably rail brake (1, 2, 3) which can be continuous (1, 3), discontinuous having at least two sequentially arranged lamellas (2), arranged above (1), below (3) or in the middle (2) of braking part of said rail element, preferably rail brake (4).

The same description can be applied to the other part of the rail element, also causing noise as a result of friction (as stated, in preferred embodiment rail brakes comprises two parts).

Lamella of rail element, preferably rail brake (1, 2, 3) is made of already described composite material with already described effects, but it can also feature reinforcement (2.1) for reinforcing of said lamella of rail element, preferably rail brake (1, 2, 3).

Said reinforcement (2.1) in accordance with this invention ensures that said lamella remains within a groove also if increased temperature occur, these temperatures normally causing creep or even change of phase (aggregate state) of lamella's material (such as melting). Lamellas have anti-noise but not necessarily braking effects.

Lamella's material can have additional property: when braking effect nears maximum friction coefficient, this material has lubricating properties in order that the friction coefficient remains in range between 0.1 and 0.4, preferably around 0.3. In this case not only lamella's material has no braking effects, to the contrary, it acts as a lubricant causing opposite effect as braking effect.

The method of use of lamella of rail element, preferably rail brake comprises the following steps:
- installation of at least one lamella of rail element, preferably rail brake (1, 2, 3);
- providing for friction between said at least one lamella of said rail element, preferably rail brake (1, 2, 3) and said wheel of said rolling stock (5), resulting in anti-noise, however not necessarily braking effect of said lamella of said rail element, preferably rail brake (1, 2, 3);
- wear of said at least one lamella of said rail element, preferably rail brake (1, 2, 3) and simultaneous release of substance for decrease (reduction) of braking noise.

The method of manufacture of a lamella of rail element, preferably rail brake (1, 2, 3) comprises installation of reinforcement (2.1) into composite material, wherein said reinforcement (2.1) provides that material of lamella remains inside groove, said groove provided in said rail element, preferably rail brake (1, 2, 3), even then when temperature of said rail element, preferably rail brake (1, 2, 3) increases due to friction during braking, said increased temperature normally leading to softening, creeping or even melting of material of lamella of rail element, preferably rail brake (1, 2, 3).

## Claims

1. An assembly comprising a plurality of elastic lamellas, and a rail element, being a rail brake, wherein said rail brake comprises a friction surface (8), and a reinforcing supporting structure, wherein said lamellas or a parts of them of said rail element acts as anti-noise barrier or its part or as damper having elastic structure and resulting in absorbing vibrations caused by contact between said at least one wheel of rolling stock (5) and said friction surface (8), wherein grooves having non-cylindrical cross section in which said lamellas are installed are formed in said friction surface (8) of said rail element, **characterized in that** further lamellas are positioned either above, or below, or both above and below of said rail element.

2. The assembly according to claim 1, wherein at least one of said grooves (4) is arranged under angle relative to longitudinal axis of said rail element.

3. The assembly according to claims 1 to 2 wherein at least one lamella of rail element, (1, 2, 3) can be continuous (1, 3) or discontinuous having at least two sequentially arranged lamellas (2).

4. The assembly according to any of preceding claims wherein at least one of said lamellas of said rail element, further comprises noise reduction substance released by said at least one of said lamellas of said rail element to reduce noise generated during braking of said at least one wheel of at least one rolling stock (5) by said rail element.

5. A method of noise reduction caused by an assembly according to any of claims 1 to 3, whereby a rail brake engaging braking part of said rail brake acts on a wheel of a rolling stock (5), wherein said method for limiting of noise during the braking comprises the following steps:
- entrance of said wheel into said rail element;
- contact between at least one of said lamellas of rail element attached to said rail element and said at least one wheel of said rolling stock (5);
- friction between said rail element and said at least one wheel of said rolling stock (5), due to braking! reduction of speed/ of said rolling stock (5), and resulting in high frequency noise;
- limitation of noise propagation using said at least one lamella of said rail element, in such a way that said lamella of said rail element acts as anti-noise barrier or its part or damper having elastic structure and resulting in absorbing vibrations caused by contact between said at least one wheel of said rolling stock (5) and said rail element;
- release of a substance during braking of said rolling stock (5) by means of said rail element, said substance being comprised in said lamella of said rail element and said substance having properties to act as lubricant preventing substantially exceeding predetermined value of friction coefficient.

6. The method of noise reduction caused by rail element according to claim 5 further comprising step of releasing of a substance during braking of said rolling stock (5) by means of said rail element, said substance comprised in said lamella of said rail element, and having properties to act as lubricant preventing substantially exceeding border value of friction coefficient between said rail element and said at least one wheel of said rolling stock (5), said border value of friction coefficient between said rail element and said at least one wheel of said rolling stock (5) ranging between 0.1 and 0.4 preferably around 0.3.

7. The method of noise reduction caused by rail element according claim 5 or 6 further comprising step of having said at least one lamella of said rail element equipped with reinforcing structure in such a way that said reinforcing structure provides for structure and form, and enables at least one from the following: use of at least one substance of said at least one lamella of said rail element, which otherwise poorly binds with at least one other substance of said at least one lamella of said rail element, use of at least one substance of said at least one lamella of said rail element which would under increased temperature during braking soften, use of at least one substance of said at least one lamella of said rail element, which would under increased temperature during braking change its form unless reinforced.

## Patentansprüche

1. Baugruppe, umfassend eine Vielzahl von elastischen Lamellen und ein Schienenelement, das eine Schienenbremse ist, wobei die Schienenbremse eine Reibfläche (8) und eine verstärkende Stützstruktur umfasst, wobei die Lamellen oder ein Teile davon des Schienenelements als Geräuschschutzbarriere oder als Teil davon oder als Dämpfer wirkt, der eine elastische Struktur aufweist, und was zu einem Absorbieren von Vibrationen führt, die durch Kontakt zwischen dem mindestens einen Rad eines Rollmaterials (5) und der Reibfläche (8) verursacht werden, wobei Nuten mit nicht zylindrischem Querschnitt, in denen die Lamellen eingebaut sind, in der Reibfläche (8) des Schienenelements ausgebildet sind, **dadurch gekennzeichnet, dass** weitere Lamellen entweder oberhalb oder unterhalb oder sowohl oberhalb als auch unterhalb des Schienenelements positioniert sind.

2. Baugruppe nach Anspruch 1, wobei mindestens eine der Nuten (4) in einem Winkel relativ zur Längsachse des Schienenelements angeordnet ist.

3. Baugruppe nach den Ansprüchen 1 bis 2, wobei mindestens eine Lamelle des Schienenelements (1, 2, 3) kontinuierlich (1, 3) oder diskontinuierlich sein kann, wobei sie mindestens zwei hintereinander angeordnete Lamellen (2) aufweist.

4. Baugruppe nach einem der vorhergehenden Ansprüche, wobei mindestens eine der Lamellen des Schienenelements ferner eine geräuschreduzierende Substanz umfasst, die durch die mindestens eine der Lamellen des Schienenelements freigesetzt wird, um ein Geräusch zu reduzieren, das während eines Bremsens des mindestens einen Rads von mindestens einem Rollmaterial (5) durch das Schienenelement erzeugt wird.

5. Verfahren zur Reduzierung eines Geräuschs, das durch eine Baugruppe nach einem der Ansprüche 1 bis 3 verursacht wird,
wobei ein in die Schienenbremse eingreifender Bremsteil der Schienenbremse auf ein Rad eines Rollmaterials (5) wirkt, wobei das Verfahren zum Begrenzen eines Geräuschs während des Bremsens die folgenden Schritte umfasst:
- Eintritt des Rades in das Schienenelement;
- Kontakt zwischen mindestens einer der Lamellen des Schienenelements, die an dem Schienenelement angebracht sind, und dem mindestens einen Rad des Rollmaterials (5);
- Reibung zwischen dem Schienenelement und dem mindestens einen Rad des Rollmaterials (5) aufgrund eines Bremsens/einer Geschwindigkeitsreduzierung/ des Rollmaterials (5), und was zu einem hochfrequentem Geräusch führt;
- Begrenzung der Geräuschausbreitung unter Verwendung der mindestens einen Lamelle des Schienenelements derart, sodass die Lamelle des Schienenelements als Geräuschschutzbarriere oder als Teil davon oder als Dämpfer wirkt, der eine elastische Struktur aufweist, und was zu einem Absorbieren von Vibrationen führt, die durch Kontakt zwischen dem mindestens einen Rad des Rollmaterials (5) und dem Schienenelement verursacht werden;
- Freisetzung einer Substanz während eines Bremsens des Rollmaterials (5) mittels des Schienenelements, wobei die Substanz in der Lamelle des Schienenelements umfasst ist und wobei die Substanz Eigenschaften aufweist, um als Schmiermittel zu wirken, wodurch ein wesentliches Überschreiten eines vorbestimmten Werts des Reibungskoeffizienten verhindert wird.

6. Verfahren zur Reduzierung eines Geräuschs, das durch ein Schienenelement verursacht wird, nach Anspruch 5, ferner einen Schritt eines Freisetzens einer Substanz während eines Bremsens des Rollmaterials (5) mittels des Schienenelements umfassend, wobei die Substanz in der Lamelle des Schienenelements umfasst ist und Eigenschaften aufweist, um als Schmiermittel zu wirken, wodurch ein wesentliches Überschreiten eines Grenzwerts des Reibungskoeffizienten zwischen dem Schienenelement und dem mindestens einen Rad des Rollmaterials (5) verhindert wird, wobei der Grenzwert des Reibungskoeffizienten zwischen dem Schienenelement und dem mindestens einen Rad des Rollmaterials (5) in einem Bereich zwischen 0,1 und 0,4 liegt, bevorzugt bei etwa 0,3.

7. Verfahren zur Reduzierung eines Geräuschs, das durch ein Schienenelement verursacht wird, nach Anspruch 5 oder 6, ferner umfassend einen Schritt eines Ausstattens der mindestens einen Lamelle des Schienenelements mit einer Verstärkungsstruktur derart, dass die Verstärkungsstruktur für Struktur und Form sorgt und mindestens eines aus den Folgenden ermöglicht: Verwendung mindestens einer Substanz der mindestens einen Lamelle des Schienenelements, die sich ansonsten schlecht mit mindestens einer anderen Substanz der mindestens einen Lamelle des Schienenelements verbindet, Verwendung mindestens einer Substanz der mindestens einen Lamelle des Schienenelements, die bei erhöhter Temperatur während eines Bremsens weich würde, Verwendung mindestens einer Substanz der mindestens einen Lamelle des Schienenelements, die bei erhöhter Temperatur während eines Bremsens seine Form ändern würde, wenn sie nicht verstärkt wäre.

## Revendications

1. Ensemble comprenant une pluralité de lamelles élastiques et un élément de rail, qui est un frein de rail, ledit frein de rail comprenant une surface de frottement (8) et une structure de support de renforcement, lesdites lamelles ou une parties d'entre elles dudit élément de rail agissant en tant que barrière anti-bruit ou sa partie ou en tant qu'amortisseur comportant une structure élastique et entraînant l'absorption des vibrations causées par le contact entre ladite au moins une roue de matériel roulant (5) et ladite surface de frottement (8), des rainures comportant une section transversale non cylindrique dans laquelle lesdites lamelles sont installées, étant formées dans ladite surface de frottement (8) dudit élément de rail, **caractérisé en ce que** des lamelles supplémentaires sont positionnées soit au-dessus, soit au-dessous, ou à la fois au-dessus et au-dessous dudit élément de rail.

2. Ensemble selon la revendication 1, au moins l'une desdites rainures (4) étant agencée sous un angle par rapport à l'axe longitudinal dudit élément de rail.

3. Ensemble selon les revendications 1 à 2, au moins une lamelle d'élément de rail (1, 2, 3) pouvant être continue (1, 3) ou discontinue comportant au moins deux lamelles (2) agencées séquentiellement.

4. Ensemble selon l'une quelconque des revendications précédentes, au moins l'une desdites lamelles dudit élément de rail comprenant en outre une substance de réduction de bruit libérée par ladite au moins une desdites lamelles dudit élément de rail pour réduire le bruit généré durant le freinage de ladite au moins une roue d'au moins un matériel roulant (5) par ledit élément de rail.

5. Procédé de réduction du bruit causé par un ensemble selon l'une quelconque des revendications 1 à 3,
moyennant quoi une partie de freinage de mise en prise de frein de rail du frein de rail agit sur une roue d'un matériel roulant (5), ledit procédé permettant la limitation du bruit durant le freinage comprenant les étapes suivantes :
- entrée de ladite roue dans ledit élément de rail ;
- contact entre au moins l'une desdites lamelles de l'élément de rail fixée audit élément de rail et ladite au moins une roue dudit matériel roulant (5) ;
- frottement entre ledit élément de rail et ladite au moins une roue dudit matériel roulant (5), dû au freinage/ à la réduction de vitesse/ dudit matériel roulant (5), et se traduisant par un bruit haute fréquence ;
- limitation de la propagation de bruit à l'aide de ladite au moins une lamelle dudit élément de rail, d'une façon telle que ladite lamelle dudit élément de rail agit en tant que barrière anti-bruit ou sa partie ou amortisseur comportant une structure élastique et entraînant l'absorption des vibrations causées par le contact entre ladite au moins une roue dudit matériel roulant (5) et ledit élément de rail ;
- libération d'une substance durant le freinage dudit matériel roulant (5) au moyen dudit élément de rail, ladite substance étant comprise dans ladite lamelle dudit élément de rail et ladite substance comportant des propriétés lui permettant d'agir en tant que lubrifiant empêchant le dépassement sensible de la valeur prédéfinie du coefficient de frottement.

6. Procédé de réduction de bruit causé par un élément de rail selon la revendication 5, comprenant en outre l'étape de libération d'une substance durant le freinage dudit matériel roulant (5) au moyen dudit élément de rail, ladite substance étant comprise dans ladite lamelle dudit élément de rail, et comportant des propriétés pour agir en tant que lubrifiant empêchant le dépassement sensible de la valeur limite du coefficient de frottement entre ledit élément de rail et ladite au moins une roue dudit matériel roulant (5), ladite valeur limite du coefficient de frottement entre ledit élément de rail et ladite au moins une roue dudit matériel roulant (5) étant comprise dans la plage entre 0,1 et 0,4, de préférence autour de 0,3.

7. Procédé de réduction de bruit causé par un élément de rail selon la revendication 5 ou 6, comprenant en outre l'étape d'équipement de ladite au moins une lamelle dudit élément de rail d'une structure de renforcement d'une façon telle que ladite structure de renforcement fournit une structure et une forme, et permet au moins l'un des suivantes : l'utilisation d'au moins une substance de ladite au moins une lamelle dudit élément de rail, qui sinon se lie mal à au moins une autre substance de ladite au moins une lamelle dudit élément de rail, l'utilisation d'au moins une substance de ladite au moins une lamelle dudit élément de rail qui, sous l'effet d'une température accrue durant le freinage, se ramollirait, l'utilisation d'au moins une substance de ladite au moins une lamelle dudit élément de rail, qui, sous l'effet d'une température accrue durant le freinage, changerait de forme à moins d'être renforcée.
